(19) Europäisches Patentamt

European Patent Office

Office européen des brevets

(11) **EP 0 921 145 B1**

(12) **EUROPÄISCHE PATENTSCHRIFT**

(45) Veröffentlichungstag und Bekanntmachung des Hinweises auf die Patenterteilung:
**12.09.2001  Patentblatt 2001/37**

(51) Int Cl.⁷: **C08G 63/87**, C08G 63/82

(21) Anmeldenummer: **98121697.1**

(22) Anmeldetag: **13.11.1998**

(54) **Verfahren zur Herstellung von Polyestern mit Mischkatalysatoren**

Process for the production of polyesters with mixed catalysts

Procédé pour la production de polyesters avec catalyseurs mixtes

(84) Benannte Vertragsstaaten:
**DE ES FR GB IT NL**

(30) Priorität: **02.12.1997  DE 19753378**

(43) Veröffentlichungstag der Anmeldung:
**09.06.1999  Patentblatt 1999/23**

(73) Patentinhaber: **Zimmer Aktiengesellschaft
D-60388 Frankfurt (DE)**

(72) Erfinder:
• **Otto, Brigitta, Dr.
  14715 Milow (DE)**
• **Thiele, Ulrich, Dr.
  63486 Bruchköbel (DE)**
• **Schiebisch, Jens, Dr.
  63571 Gelnhausen (DE)**

(74) Vertreter: **Grünecker, Kinkeldey,
Stockmair & Schwanhäusser Anwaltssozietät
Maximilianstrasse 58
80538 München (DE)**

(56) Entgegenhaltungen:
**BE-A- 878 249**

• **DATABASE WPI Section Ch, Week 8114 Derwent
Publications Ltd., London, GB; Class A23, AN
81-24373D XP002098066 & JP 56 014527 A
(NOSOFSKY J E) , 12. Februar 1981**

**Beschreibung**

Die Erfindung betrifft ein Verfahren zur Herstellung linearer Polyester durch Umesterung mindestens eines Dicarbonsäuredialkylesters oder Veresterung mindestens einer Dicarbonsäure mit mindestens einem Diol und nachfolgende Vorkondensation und Polykondensation in Gegenwart üblicher Katalysatoren sowie eines zusätzlichen Cokatalysators und die Verwendung dieses Polyesters zur Herstellung von Folien, Flaschen, Formkörpern oder Fasern.

Die Herstellung von linearen Polyestern erfolgt im allgemeinen durch Umsetzung eines Diols mit einer Dicarbonsäure oder einem Dicarbonsäureester, z. B. dem Dimethylester. Es entsteht zunächst der Dicarbonsäurediester, der bei ansteigenden Temperaturen unter Verminderung des Druckes ein- oder mehrstufig polykondensiert wird, wobei Diol und Wasser freigesetzt werden. Als Katalysatoren für die. Umesterung werden Verbindungen des Ti, Mn, Mg, Ca, Li, Co und/oder Zn,für die Veresterung Verbindungen des Sb, Ti, Ge und/oder Sn und für die Polykondensation Verbindungen des Sb, Ti, Pb, Ge, Zn und/oder Sn oder Zeolithe verwendet, wobei die Menge an Katalysatormetall allein für die Polykondensation bis zu 500 ppm, bezogen auf Polyester, betragen kann. Antimonverbindungen, als die bei der Herstellung von Polyester am häufigsten eingesetzten Veresterungs- und Polykondensationskatalysatoren, werden in Mengen von etwa 150-250 ppm Antimon benötigt, insbesondere für den Einsatz des Polyesters für Lebensmittelverpackungen sind aber höhere Konzentrationen als 200 ppm Antimon nicht wünschenswert.

Aus der Literatur (Derwent-Referat Nr. 81-33905 0 zu SU 759541 B1) ist bekannt, daß die Umesterung von Dimethylterephthalat mit Ethylenglykol in Gegenwart eines Gemisches aus Titantetrabutylat und Aktivkohle im Gewichtsverhältnis von etwa 0,017 : 1 durchgeführt werden kann, wobei sehr hohe Mengen von etwa 2 Gew.-% Aktivkohle (bezogen auf Dialkylester) eingesetzt werden. Hierbei dient die Aktivkohle als Mittel zur Beeinflussung der Farbe.

In einem anderen Verfahren (Derwent-Referat Nr. 76-88266X D zu SU 495333 A) werden zur Herstellung von PVC-Weichmachern Gemische aus Di- und Tricarbonsäuremethylestern mit Neopentylglykol in Gegenwart von Zinkacetat und Aktivkohle umgeestert. Gemäß der Patentschrift werden etwa 0,6 Gew.-% Zinkacetat und etwa 1,2 Gew.-% Aktivkohle (bezogen auf Methylester) benötigt. Eine weitere Veröffentlichung (Derwent-Referat Nr. 88-297391 zu JP 63-218750 A) beschreibt die Herstellung von niedermolekularen Weichmachern durch Copolymerisation von Adipinsäure und Hydroxystearinsäure mit Butylenglykol und Ethylhexanol im Gegenwart von etwa 0,045 Gew.-% Dibutylzinnoxid und etwa 0,9 Gew.-% Aktivkohle (bezogen auf die Summe der Säuren). Über eine spezifische, katalytische Aktivität von Aktivkohle und/oder deren Verwendung als Co-Katalysator bei der Polykondensation linearer Polyester wurde jedoch bisher nichts bekannt.

Dk BE-B-878 249 beschreibt Polykondensations reaktionen mit einem Tetrabutoxytitan-Aktivkohle-Gemisch. Angaben über die Korngröße der Aktivkohle sind nicht gemacht.

Aufgabe der vorliegenden Erfindung ist es, lineare Polyester, insbesondere für Flaschen, Folien und sonstige Lebensmittelverpackungen sowie Filamente und Fasern, herzustellen, welche einen gegenüber dem Stand der Technik reduzierten Gehalt an katalytischen Metallverbindungen und gegebenenfalls anderen gesundheitsgefährdenden Substanzen aufweisen.

Die Lösung dieser Aufgabe erfolgt erfindungsgemäß durch ein Verfahren gemäß den Angaben des Patentanspruchs 1. Dieses Verfahren ist dadurch gekennzeichnet, daß die Polykondensation und wahlweise die Veresterung zusätzlich in Gegenwart eines kohlenstoffhaltigen Cokatalysators erfolgt, einer Aktivkohle mit einer spezifischen Oberfläche von mehr als 500 $m^2$/g und einer mittleren Korngröße von weniger als 2 µm.

Überraschenderweise wurde gefunden, daß in Verbindung mit den üblichen katalytischen Metallverbindungen erfindungsgemäß eingesetzte Aktivkohle als Cokatalysator der Polykondensations- und/oder der Veresterungsreaktion wirkt. Die katalytische Wirkung kann auf die der Aktivkohle immanenten Eigenschaften zurückgeführt werden. In der wahllosen Anordnung von Graphitkristalliten und amorphem Kohlenstoff liegt der Grund für die Sekundärstruktur der Aktivkohle. Zwischen diesen einzelnen Partikeln liegen Spalten und Poren (Mikroporen < 2 nm, Mesoporen 2 - 50 nm, Makroporen > 50 nm), die ein sehr großes Hohlraumsystem bilden und die für Aktivkohle typische, große spezifische Oberfläche ausmachen. Aufgrund der speziellen Kristallstruktur der Aktivkohle sind die am Rande der Schichtstruktur liegenden Kohlenstoffatome chemisch nicht abgesättigt und bilden sogenannte aktive Zentren, die die Reaktivität der Aktivkohle begründen. Als Cokatalysator wird Aktivkohle mit einer spezifischen Oberfläche von mehr als 500 $m^2$/g, vorzugsweise von mehr als 900 $m^2$/g eingesetzt.

Die Elementaranalyse zeigt, daß neben Wasserstoff, Sauerstoff und Stickstoff auch andere anorganische Bestandteile, die dem Rohstoff der Aktivkohle entstammen, wie z.B. Ca, K, Na, Si, Fe, Mg, Mn, Zn und Cl, in Spuren in der Aktivkohle enthalten sein können. (Hartmut v. Kienle, Erich Bäder; Aktivkohle und ihre industrielle Anwendung, Ferdinand Enke Verlag/Stuttgart, [1980]). Bevorzugt wird Aktivkohle mit einer Qualität, wie sie im Handel zur Trinkwasseraufbereitung, für die Lebensmittelindustrie oder für medizinische Zwecke angeboten wird, verwendet. Diese Aktivkohle-Qualität bietet den Vorteil frei von gesundheitsschädigenden polycyclischen Aromaten, wie Benzpyren zu sein, so daß der damit hergestellte Polyester problemlos auch für Lebensmittelverpackungen eingesetzt werden kann.

Da die katalytische Aktivität der Aktivkohle und der Farbeindruck von mit Aktivkohle versetztem Polyester in starkem Maße von der Korngröße abhängen, wird die Aktivkohle erfindungsgemäß auf eine mittlere Korngröße (arith-

metisches Mittel) d$_{50}$ von weniger als 2 µm, bevorzugt weniger als 0,5 µm, eingestellt. Vorzugsweise erfolgt die Einstellung der Korngröße durch Vermahlung der pulverförmigen Aktivkohle in einem flüssigen Medium, bevorzugt dem dem Polyester zugrundeliegenden Diol, bei Polyethylenterephthalat oder -naphthalat also in Ethylenglykol.

Der kohlenstoffhaltige Cokatalysator wird zusätzlich zu dem üblichen Polykondensationskatalysator, wie Verbindungen des Sb, Ti, Pb, Ge, Zn und/oder Sn oder Zeolithe, und wahlweise zusätzlich zu dem üblichen Veresterungskatalysator, wie Verbindungen des Sb, Ti, Ge und/oder Sn, in Mengen von üblicherweise 0,1 bis bis 1000 ppm, bevorzugt 0,1 bis 500 ppm Cokatalysator, bezogen auf Polyester, bei einem Gewichtsverhältnis Katalysator zu Cokatalysator von 1 zu 0,01 bis 5, bevorzugt 1 zu 0,01 bis 3 eingesetzt.

Mit ansteigender Konzentration an Cokatalysator kann die Konzentration an für die Polykondensation bzw. Veresterung üblichen Katalysatoren reduziert werden, wobei vorzugsweise 1 bis 3 Gewichtsteile Aktivkohle in etwa 1 Gewichtsteil des Metalls eines üblichen Katalysators ersetzen. Die Menge des üblichen Katalysators, die zusammen mit dem Cokatalysator zum Einsatz kommt, sollte mindestens etwa 50 % der Menge betragen, die ohne Cokatalysator-Zusatz erforderlich wäre. Die Konzentration des Cokatalysators kann für jeden Anwendungszweck verschieden gewählt werden. So hat sich für die Herstellung klarsichtiger Lebensmittelverpackungen, wie Getränkeflaschen, ein Konzentrationsbereich von 0,1 bis 50 ppm, bevorzugt 0,5 - 15 ppm Aktivkohle als günstig erwiesen, wogegen zur Herstellung von Trägerfolien für die Filmindustrie Konzentrationen von 10 - 500 ppm vorteilhafter sind. Für die Herstellung von massengefärbten, schwarzen Textilfasern oder sonstigen Formkörpern kann die Konzentration bis 1000 ppm gesteigert werden. Noch höhere Konzentrationen an Aktivkohle bringen keine Vorteile in Hinsicht auf deren katalytische Aktivität, können aber in ihrer Funktion als schwarzer Farbstoff in Betracht kommen.

Bei der erfindungsgemäßen Herstellung von linearen Polyestern oder Copolyestern, durch Umesterung von mindestens einem Dicarbonsäuredialkylester oder durch Veresterung von mindestens einer Dicarbonsäure mit mindestens einem Diol, und nachfolgende ein- oder mehrstufige Polykondensation erfolgt der Zusatz des Cokatalysators und der für die Polykondensation und wahlweise für die Veresterung erforderlichen, üblichen Katalysatoren getrennt voneinander oder gemeinsam als Suspension, bevorzugt als suspension in dem dem Polyester zugrunde liegenden Diol. Bei Veresterungsverfahren kann die Aktivkohlesuspension vor, während oder nach der Veresterung oder vor oder während der ersten Hälfte (bezogen auf Verweilzeit) der Polykondensation zugesetzt werden.

Bei Umesterungsverfahren sollte die Zugabe der Aktivkohle erst nach der Blockierung der Umesterungskatalysatoren erfolgen, da die katalytische Aktivität der Aktivkohle für die Polykondensation, durch die üblicherweise hierfür verwendeten Phosphorverbindungen stark eingeschränkt wird.

Die bei der Herstellung von Polyester, insbesondere für Verpackungen, häufig eingesetzten Stabilisatoren, wie Phosphorsäure, phosphorige Säure, Phosphonsäure, Carboxyphosphonsäure und deren Verbindungen, sollten in bezug auf ihren Zugabezeitpunkt von dem Zugabezeitpunkt der Aktivkohle verschieden sein und von diesem, bezogen auf den Verlauf der Polyesterherstellung, möglichst entfernt liegen. So wird beispielsweise dem Monomerengemisch im Veresterungsverfahren die Aktivkohle zu Beginn zugesetzt, und der phosphorhaltige Stabilisator in einer Menge von 1 - 50 ppm, vorzugsweise von 1 - 10 ppm Phosphor, bezogen auf Polyester, frühestens nach vollendeter Einspeisung des gesamten Monomerengemisches, entsprechend einem Veresterungsgrad von 60 bis 98 %, zugegeben. Bei einer nichtkatalysierten Veresterung kann zu Beginn der Veresterung der phosphorhaltige Stabilisator und am Ende der Veresterung die Aktivkohle gemeinsam mit dem üblichen Polykondensations-Katalysator zugegeben werden. Andere Varianten sind möglich.

Unter Polyester werden erfindungs gemäß Polymere aus Terephthalsäure oder 2,6-Naphthalindicarbonsäure und Ethylenglykol, 1,3-Propandiol, 1,4-Butandiol und/oder 1,4-Cyclohexandimethanol und deren Copolymere mit anderen Dicarbonsäuren, wie beispielsweise Isophthalsäure, Terephthalsäure, 1,4-Cyclohexandicarbonsäure, 2,6-Naphthalindicarbonsäure, p-Hydroxybenzoesäure, 4,4'-Bisphenyldicarbonsäure, Adipinsäure und/oder Diolen, wie Diethylenglykol, 1,4-Butandiol, 1,4-Cyclohexandimethanol, Polyglykole mit einem Molekulargewicht unter 1000, verstanden. Bevorzugte Polyester sind Polyethylenterephthalate, welche 0,5 - 5,0 Gew.-% Diethylenglykol und 0 - 5,0 Gew.-% Isophthalsäure, 2,6-Naphtalindicarbonsäure, p-Hydroxybenzoesäure und/oder 1,4-Cyclohexandimethanol als Comonomere enthalten.

Entsprechend dem Verwendungszweck kann es vorteilhaft sein, die durch die Lichtabsorption der fein verteilten Aktivkohle hervorgerufene Vergrauung des Polyesters durch den Zusatz eines optischen Aufhellers, wie Eastobrite 081 von Eastman Chemical B.V. Den Haag /NL, zu kompensieren. Dies ist insbesondere bei der Herstellung von Polyestern für klarsichtige Verpackungen zweckmäßig. Gleichfalls kann es von Vorteil sein, einen Blautöner dem erfindungsgemäß hergestellten Polyester hinzuzufügen. Als solcher eignen sich organische, blaue oder blau-rötliche Farbstoffe in Mengen von wenigen ppm und/oder 0 - 30 ppm Cobalt in Form eines polyesterlöslichen Salzes. Die Zugabe erfolgt gemeinsam mit dem üblichen Katalysator, kann aber auch zu jedem beliebigen, insbesondere späteren Zeitpunkt vorgenommen werden.

Auch die Zugabe von polyfunktionellen Alkoholen, wie Tri- oder Tetrahydroxyalkanen, oder polyfunktionellen Carbonsäuren in Konzentrationen bis zu 300 ppm, bezogen auf Polyester, ist möglich. Mit dieser Maßnahme läßt sich die Konzentration der üblichen Katalysatoren noch weiter reduzieren. Besonders interessant ist diese Maßnahme dann, wenn der Polyester nach der Schmelzepolykondensation granuliert wird, und das Granulat kristallisiert und in fester Phase nachkondensiert wird, da gleichzeitig eine Beschleunigung der Festphasenpolykondensation erzielt wird.

Durch Zusatz des erfindungsgemäßen Cokatalysators läßt sich die zur Herstellung einer vorgegebenen Polyesterqualität erforderliche Menge eines oder mehrerer üblicher Katalysatoren bis auf etwa die Hälfte reduzieren, wobei die mechanischen, chemischen und thermischen Eigenschaften des Polyesters nicht beeinträchtigt werden. Die optischen Eigenschaften des Polyesters lassen sich hierbei in Abhängigkeit von der Aktivkohle-Konzentration von minimaler Veränderung bis hin zur Schwarzfärbung, je nach Verwendungszweck, kontrolliert einstellen.

Erfindungsgemäß hergestelltes Polyethylenterephthalat und dessen Copolymere zeichnen sich durch einen Carboxylendgruppengehalt von weniger als 40 mmol/kg, vorzugsweise 22 - 38 mmol/kg aus. Polyethylenterephthalat mit 0,5 - 2 Gew.-% Diethylenglykol und 0 - 5 Gew.-% Isophthalsäure und/oder 0 - 5 Gew.-% 1,4-Cyclohexandimethanol, welches mit maximal 15 ppm des erfindungsgemäßen Aktivkohle-Cokatalysators und einer Antimonverbindung als üblicher Katalysator hergestellt wurde, hat einen Trübungswert von weniger als 10 NTU und ist für den Einsatz von Lebensmittelverpackungen gut geeignet. Generell läßt sich der erfindungsgemäße Polyester mit 0,1 bis 1000 ppm Aktivkohle mit den vorstehend genannten Eigenschaften zu Folien, Flaschen und sonstigen Formkörpern oder Fasern verarbeiten.

Die Erfindung wird nachfolgend anhand einiger, in keiner Weise einschränkender Beispiele näher erörtert. Die angegebenen Eigenschaftswerte wurden hierbei wie folgt ermittelt:

Die Intrinsic-Viskosität (I.V) wurde bei 25 °C an einer Lösung von 500 mg Polyester in 100 ml eines Gemisches aus Phenol und 1,2-Dichlorbenzol (3 : 2 Gew.-Teile) gemessen.

Die COOH-Endgruppenkonzentration wurde mittels photometrischer Titration, mit 0,05 n ethanolischer Kalilauge gegen Bromthymolblau, einer Lösung eines Polyesters in einem Gemisch aus o-Kresol und Chloroform (70 : 30 Gew.-Teile) bestimmt.

Freies Ethylenglykol (EG) wurde durch Umsetzung mit Perjodsäure zu Formaldehyd, Reduktion der überschüssigen Perjodsäure mit Kaliumjodid und Titration des dabei freiwerdenden Jods ermittelt.

Die Bestimmung von Diethylenglykol (DEG), Isophthalsäure (IPA) und 1,4-Cyclohexandimethanol (CHDM) im Polyester erfolgte mittels Gaschromatographie nach vorangegangener Methanolyse von 1 g Polyester in 30 ml Methanol unter Zusatz von 50 mg/l Zinkacetat im Bombenrohr bei 200 °C.

Die Verseifungszahl wurde durch Verseifung mit Kaliumhydroxid in n-Propanol und potentiometrische Titration und die Säurezahl durch potentiometrische Titration in Dimethylformamid bestimmt. Der Veresterungsgrad (U) wurde aus der Verseifungszahl (Vz) und der Säurezahl (Sz) des Reaktionsgemisches gemäß der Gleichung U =(Vz - Sz) x 100/Vz berechnet.

Die Messung des Trübungsgrades in "nephelometrischen Trübungseinheiten" (NTU) erfolgte an einer 10 Gew.-%igen Lösung von Polyester in Phenol/1,2 Dichlorbenzol (3 : 2 Gew.-Teile) mit einem Nephelometer der Fa. Hach (Typ XR, nach US-Patent 4 198 161) in einer Küvette mit 22,2 mm Durchmesser, in Analogie zu der für Wasser gebräuchlichen Norm DIN 38404, Teil 2. Gemessen wird die Intensität des Streulichtes im Vergleich zu einer Formazin-Standardlösung abzüglich des Wertes vom Lösungsmittel (ca. 0,3 NTU).

Die Messung der Farbwerte L und b erfolgte nach HUNTER. Die Polyesterchips wurden zunächst im Trockenschrank bei 135 ± 5 °C während einer Stunde kristallisiert. Die Farbwerte wurden danach ermittelt, indem in einem Dreibereichsfarbmeßgerät der Farbton der Polyesterprobe mit drei Fotozellen, denen je ein Rot-, Grün- und Blaufilter vorgeschaltet war, gemessen wurde (X-, Y- und Z-Werte). Die Auswertung erfolgte nach der Formel von Hunter, wobei

$$L = 10 \cdot \sqrt{Y}$$

und

$$b = \frac{7,0}{\sqrt{Y}} \cdot (Y - 0,8467 \cdot Z)$$

Acetaldehyd wurde durch Erhitzen in einem geschlossenen Gefäß aus dem Polyester ausgetrieben und der Acetaldehydgehalt im Gasraum des Gefäßes gaschromatographisch durch Head Space - Analyse bestimmt (Gaschromatograph mit FID und Head Space-Injektionssystem HS40, Perkin Elmer; Trägergas: Stickstoff; Säule: 1,5 m Edelstahl, Füllung: Porapack Q, 80 -100 mesh; Probenmenge: 2 g; Heiztemperatur: 150 °C, Heizdauer: 90 min).

**EP 0 921 145 B1**



Herstellung einer Aktivkohle-Suspension:

Beispiel 1:

Verwendet wurde Aktivkohle BKP3 der Fa. A.U.G. Neue Aktivkohle und Umweltschutz GmbH, Premnitz, DE, mit folgender Qualität (Herstellerangaben):

| Typ | Pulver | Meßmethode |
|---|---|---|
| Oberfläche [$m^2$/g] | 1000 | BET, $N_2$ |
| Phenoladsorption [%] | 5 | DIN 19603 |
| Feuchte bei Verpackung [%] | 10 | ASTM D-2867 |
| Schüttdichte [g/$cm^3$] | 0,30 | ASTM D-2854 |
| anorgan. Bestandteile [Gew.-%] | 10 | über Veraschung (eigene Analyse) |

Angesetzt wurde eine 14 Gew.-%ige Aktivkohlesuspension in Ethylenglykol, die anschließend in den Umlaufbehälter einer Perlmühle gefüllt wurde. Die Suspension wurde im Kreislauf mittels Schlauchpumpe mit einem Durchsatz von 180 -300 kg/h durch die wassergekühlte Perlmühle (DCP SF der Fa. Drais, Mannheim, DE, mit 0,3 - 0,4 mm Durchmesser Draison-Mahlkugeln, Füllgrad: 91 %, Siebeinsatz: 0,15 mm Maschenweite) mit 11,1 m/s Umfangsgeschwindigkeit (1250 Upm) bei einer maximalen Produkttemperatur von 45,5 °C über 90 min transportiert. Anschließend wurde die Suspension mit Ethylenglykol auf etwa 8 Gew.-% verdünnt, weitere 60 min im Kreislauf gemahlen und anschließend in Behälter abgefüllt.

Die Korngrößenanalyse der glykolischen Suspension ergab folgende Werte, wobei die Messung der Korngrößenverteilung mit einem CAPA 700 Teilchenzählgerät (Dispersionsmittel Methanol, Dichte 0,79 g/$cm^3$, Viskosität 0,55 cP, Dichte der Aktivkohle 1,90 g/$cm^3$, Zentrifugengeschwindigkeit 2000 Upm, Schichtdicke 10 mm) erfolgte:

Mittlere Korngröße $d_{50}$ = 0,46 µm

| Mittlere Korngröße $d_{50}$ = 0,46 µm | |
|---|---|
| Korngröße (µm) | Kornanteil (Gew.-%) |
| < 0,4 | 45 |
| 0,4 - 1 | 41 |
| 1 - 2 | 14 |

Veresterungs- und Polykondensationsversuche:

Vergleichsbeispiele 2 - 6 und Beispiel 7:

Ausgangsprodukt war ein völlig katalysatorfreies Veresterungsprodukt aus Terephthalsäure und Ethylenglykol mit folgenden analytischen Daten:

| I.V. | 0,20 dl/g |
|---|---|
| Vz | 565 mg KOH/g |
| Sz | 22 mg KOH/g |
| U | 96 % |
| freies EG | 0,12 Gew.-% |
| DEG | 0,77 Gew.-% |

Je 100 g des Veresterungsproduktes wurden zusammen mit dem in Tabelle 1 angegebenen Katalysator und ggf. der Aktivkohlesuspension aus Beispiel 1, nach sorgfältiger Spülung des Reaktors mit Stickstoff, bei 275 °C innerhalb von 50 min unter Atmosphärendruck aufgeschmolzen. Danach wurde innerhalb von 50 min der Druck allmählich auf 0,1 mbar gesenkt und die Temperatur auf 280 °C angehoben und anschließend während zusätzlichen 135 min polykondensiert. Das mit Hilfe von flüssigem Stickstoff erstarrte Polykondensat wurde gemahlen und analysiert. Die Ergebnisse sind in der Tabelle 1 zusammengestellt.

Tabelle 1

| Beisp. Nr. | Katalysator | Katalys.-Menge (ppm)∗ | I.V. (dl/g) | ΔI.V. (dl/g)∗∗ | COOH (mmol/kg) | DEG (%) |
|---|---|---|---|---|---|---|
| 2 | ohne | 0 | 0,357 | - | 12 | 0,99 |
| 3 | Sb | 100 | 0,575 | 0,218 | 11 | 1,03 |
| 4 | Sb | 150 | 0,630 | 0,273 | 8 | 0,90 |
| 5 | AK | 100 | 0,403 | 0,046 | 13 | 1,00 |
| 6 | AK | 200 | 0,505 | 0,148 | 15 | 1,08 |
| 7 | Sb/AK | 150/20 | 0,645 | 0,288 | 12 | 1,02 |

AK = Aktivkohle als glykolische Suspension

Sb = Antimontriacetat (S 21 von Elf Atochem, Philadelphia, USA) als glykolische Suspension

∗ bezogen auf Polyester, bei Antimontriacetat als Sb, bei Aktivkohle als Trockensubstanz

∗∗ Differenz zu Beispiel Nr. 2

Vergleichsbeispiel 8 und Beispiele 9 - 10:

In einen mit ca. 30 % des Veresterungsproduktes der vorangehenden analogen Charge gefüllten Veresterungsreaktor wurden bei 260 °C und Atmosphärendruck kontinuierlich 250 kg einer homogenen Paste aus Terephthalsäure und Ethylenglykol im Molverhältnis 1 : 1,1 sowie der Katalysator und die Aktivkohle als glykolische Suspension (Beispiel 1) und der Blautöner und/oder der optische Aufheller innerhalb von 80 min eingespeist so wie in Tabelle 2 angegeben. Anschließend wurde unter Erhöhung der Temperatur auf 270 °C 30 min lang weiterverestert und kurz vor Abschluß der Veresterung der Stabilisator zugegeben. Während der gesamten Veresterung wurde das gebildete Reaktionswasser über eine Kolonne abgetrennt. Anschließend wurde der Reaktionsdruck innerhalb von 20 min auf 10 mbar reduziert und das Reaktionsgemisch in einen Polykondensationsreaktor überführt und bei 280 - 285 °C und 2 - 3 mbar während der angegebenen PK-Dauer polykondensiert. Nach Erreichen der gewünschten I.V. wurde das Vakuum auf etwa 10 mbar eingestellt und die Polyesterschmelze mittels einer Zahnradpumpe einem Unterwassergranulator zugeführt und granuliert. Die Ergebnisse sind in Tabelle 2 dargestellt.

Tabelle 2

| Beisp. Nr. | Zusatzart | Zusatzmenge (ppm) | PK-Dauer (min) | I.V. (dl/g) | COOH (mmol kg) | IPA/DEG (Gew.-%) | Trübung (NTU) | Farbe L/b |
|---|---|---|---|---|---|---|---|---|
| 8 | Sb | 200 | 145 | 0,62 | 22 | 2/1,2 | 3,8 | 81/1,0 |
| | P | 15 | | | | | | |
| | Co | 10 | | | | | | |
| 9 | Sb | 188 | 145 | 0,62 | 22 | 2/1,25 | 7,1 | 62/-2,5 |
| | AK | 12 | | | | | | |
| | P | 15 | | | | | | |
| | Co | 10 | | | | | | |
| | OB | 12 | | | | | | |
| 10 | Sb | 150 | 120 | 0,638 | 23 | 2/1,3 | - | 27/-5,5 |
| | AK | 500 | | | | | | |
| | P | 17 | | | | | | |
| | Co | 10 | | | | | | |

P: Zugabe als $H_3PO_4$, 10%ige Lösung in Ethylenglykol

Co: Zugabe als Cobaltacetat, 2%ige Lösung in Ethylenglykol

OB: Optischer Aufheller (Eastobrite OB 1) als Pulver oder als Suspension zusammen mit der Aktivkohle
(ansonsten wie Tabelle 1)

Das so hergestellte amorphe Polyethylenterephthalat-Granulat wurde einer Festphasenkondensation zugeführt. Mit einem Durchsatz von 34 kg/h wurden die PET-Chips im Gegenstrom zu einem Stickstoffstrom einem Vorkristallisator und anschließend einem Hauptkristallisator zugeführt, wobei die Produkttemperatur in der Vorkristallisation 185 °C und in der Kristallisation 210 °C betrug. Über eine Förderschnecke gelangte das Produkt danach in den Festphasenpolykondensator, in dem das PET unter Stickstoff bei Temperaturen um 205 °C bis auf eine mittlere I.V. von 0,80 dl/g polykondensiert wurde. Die Ergebnisse sind in Tabelle 3 dargestellt.

Tabelle 3

| Beispiel Nr. | 7 (Vergleich) | 8 |
|---|---|---|
| IV (dl/g) | 0,78 | 0,8 |
| COOH (mmol/kg) | 14 | 10 |
| Farbe L | 88 | 72 |
| Farbe b | 2,8 | -0,7 |
| Trübung (NTU) | 3,9 | 6,8 |
| Acetaldehyd (ppm) | 1,1 | 1,0 |

**Patentansprüche**

1. Verfahren zur Herstellung linearer Polyester durch Umesterung mindestens eines Dicarbonsäuredialkylesters oder Veresterung mindestens einer Dicarbonsäure mit mindestens einem Diol und nachfolgende Vorkondensation und Polykondensation in Gegenwart üblicher Katalysatoren, wobei die Polykondensation und wahlweise die Veresterung zusätzlich in Gegenwart eines kohlenstoffhaltigen Cokatalysators erfolgt, **dadurch gekennzeichnet, dass** der kohlenstoffhaltige Cokatalysator Aktivkohle mit einer spezifischen Oberfläche von mehr als 500 m$^2$/g und einer mittleren Korngröße von weniger als 2 μm ist.

2. Verfahren gemäß Anspruch 1, **dadurch gekennzeichnet, dass** die Aktivkohle eine spezifische Oberfläche vom mehr als 900 m$^2$/g und eine mittlere Korngröße von weniger als 0,5 μm hat.

3. Verfahren gemäß einem der Ansprüche 1 bis 2, **dadurch gekennzeichnet, dass** der kohlenstoffhaltige Cokatalysator in Mengen von 0,1 bis 1000 ppm, bezogen auf Polyester, bei einem Gewichtsverhältnis Katalysator zu Cokatalysator von 1 zu 0,01 bis 5 eingesetzt wird.

4. Verfahren gemäß Anspruch 3, **dadurch gekennzeichnet, dass** der Cokatalysator in Mengen von 0,1 bis 500 ppm bei einem Gewichtsverhältnis Katalysator zu Cokatalysator von 1 zu 0,01 bis 3 eingesetzt wird.

5. Verfahren gemäß einem der Ansprüche 1 bis 4, **dadurch gekennzeichnet, dass** während der Herstellung des linearen Polyesters übliche phosphorhaltige Stabilisatoren zugesetzt werden, wobei der Zeitpunkt der Zugabe des Stabilisators von dem Zeitpunkt der Zugabe des Cokatalysators verschieden ist.

6. Verfahren gemäß einem der Ansprüche 1 bis 5, **dadurch gekennzeichnet, dass** der lineare Polyester zu Folien, Flaschen, Formkörpem oder Fasern verarbeitet wird.

7. Folien, Flaschen, Formkörper oder Fasern aus linearem Polyester, **dadurch gekennzeichnet, dass** der Polyester 0,1 bis 1000 ppm Aktivkohle mit einer spezifischen Oberfläche von mehr als 500 m$^2$/g und einer mittleren Korngröße von weniger als 2 μm enthält.

**Claims**

1. A method of producing linear polyesters by transesterification of at least one dicarboxylic acid dialkylester or esterification of at least one dicarboxylic acid with at least one diol and subsequent precondensation and polycondensation in the presence of conventional catalysts, wherein the polycondensation and, optionally the esterification, is carried out additionally in the presence of a carbon-containing co-catalyst, **characterised in that** the carbon-containing co-catalyst is activated carbon with a specific surface of more than 500 m$^2$/g and an average particle size of less than 2 μm.

2.  A method according to Claim 1, **characterised in that** the activated carbon has a specific surface of more than 900 m$^2$/g and an average particle size of less than 0.5 μm.

3.  A method according to either Claim 1 or Claim 2, **characterised in that** the carbon-containing co-catalyst is used in quantities of 0.1 to 1000 ppm, in relation to the polyester, with a weight ratio of catalyst to co-catalyst of 1 : 0.01 to 5.

4.  A method according to Claim 3, **characterised in that** the co-catalyst is used in quantities of 0.1 to 500 ppm with a weight ratio of catalyst to co-catalyst of 1 : 0.01 to 3.

5.  A method according to any one of Claims 1 to 4, **characterised in that** during the preparation of the linear polyester conventional phosphorus-containing stabilisers are added, the time of the addition of the stabiliser being different from the time of the addition of the co-catalyst.

6.  A method according to any one of Claims 1 to 5, **characterised in that** the linear polyester is processed to form sheets, bottles, mouldings or fibres.

7.  Sheets, bottles, mouldings or fibres of linear polyester, **characterised in that** the polyester contains 0.1 to 1000 ppm activated carbon with a specific surface of more than 500 m$^2$/g and an average particle size of less than 2 μm.


**Revendications**

1.  Procédé de préparation de polyesters linéaires par trans-estérification d'au moins un ester dialkylique d'un acide dicarboxylique ou estérification d'au moins un acide dicarboxylique avec au moins un diol, suivie d'une précondensation et d'une polycondensation en présence de catalyseurs usuels, dans lequel la polycondensation et éventuellement l'estérification s'effectuent en outre en présence d'un co-catalyseur contenant du carbone, **caractérisé en ce que** le co-catalyseur contenant du carbone est un charbon actif ayant une aire spécifique supérieure à 500 m$^2$/g et une granulométrie moyenne inférieure à 2 μm.

2.  Procédé selon la revendication 1, **caractérisé en ce que** le charbon actif a une aire spécifique supérieure à 900 m$^2$/g et une granulométrie moyenne inférieure à 0,5 μm.

3.  Procédé selon l'une des revendications 1 et 2, **caractérisé en ce que** co-catalyseur contenant du carbone est utilisé en des quantités de 0,1 à 1000 ppm par rapport au polyester, pour un rapport en poids du catalyseur au co-catalyseur de 1:0,01 à 5.

4.  Procédé selon la revendication 3, **caractérisé en ce que** le co-catalyseur est utilisé en des quantités de 0,1 à 500 ppm pour un rapport en poids du catalyseur au co-catalyseur de 1:0,01 à 3.

5.  Procédé selon l'une des revendications 1 à 4, **caractérisé en ce que**, pendant la préparation du polyester linéaire, on ajoute des stabilisants usuels contenant du phosphore, l'instant d'addition du stabilisant étant différent de l'instant d'addition du co-catalyseur.

6.  Procédé selon l'une des revendications 1 à 5, **caractérisé en ce que** le polyester linéaire est amené sous la forme de feuilles, de bouteilles, de corps moulés ou de fibres.

7.  Feuilles, bouteilles, corps moulés ou fibres, en polyester linéaire, **caractérisés en ce que** le polyester contient de 0,1 à 1000 ppm de charbon actif ayant une aire spécifique supérieure à 500 m$^2$/g et une granulométrie moyenne inférieure à 2 μm.